# EUROPÄISCHE PATENTSCHRIFT

(11) **EP 3 246 996 B1**
(45) Veröffentlichungstag und Bekanntmachung des Hinweises auf die Patenterteilung: **23.08.2023**
(21) Anmeldenummer: 17153517.2
(22) Anmeldetag: 27.01.2017
(51) Int. Cl.: H01R 9/28, H01R 9/24, H01R 13/447, H02B 1/056, H02G 5/00

(54) **GERÄT FÜR EIN STROMSAMMELSCHIENENSYSTEM**
DEVICE FOR A BUSBAR SYSTEM
APPAREIL POUR UN SYSTÈME DE RAIL DE BARRE OMNIBUS

(30) Priorität: 17.05.2016 EP 16169977
(43) Veröffentlichungstag der Anmeldung: 22.11.2017
(73) Patentinhaber: Wöhner GmbH & Co. KG Elektrotechnische Systeme, 96472 Rödental (DE)
(72) Erfinder: STEINBERGER, Philipp, 96450 Coburg (DE)
(74) Vertreter: Isarpatent

(56) Entgegenhaltungen:
- EP-A1- 2 863 496
- EP-A2- 2 461 440
- WO-A1-2004/057716
- WO-A1-2004/073127
- JP-U- S6 215 795
- US-A1- 2007 228 826
- US-B1- 7 957 121

## Beschreibung

Die Erfindung betrifft ein Gerät für ein Stromsammelschienensystem, das mittels eines berührungsgeschützten integrierten Grundplattenmoduls an das Stromsammelschienensystem anschließbar ist.

Ein Stromsammelschienensystem kann ein oder mehrere Stromsammelschienen zur Stromversorgung von elektrischen Geräten umfassen. Herkömmliche Stromsammelschienensysteme verwenden Stromsammelschienen mit einem rechteckigen Querschnitt zur Stromführung. Derartige Stromsammelschienen können beispielsweise innerhalb von Schaltschränken montiert werden und werden für ein- oder mehrphasige Stromversorgungssysteme eingesetzt. Zur mehrphasigen Stromversorgung werden Stromsammelschienen herkömmlicherweise parallel zueinander angeordnet, wobei Schaltgeräte mittels Rastelementen oder mithilfe von Adaptereinrichtungen auf die parallel angeordneten Stromsammelschienen aufgesetzt werden. Bei herkömmlichen Stromsammelschienensystemen ist es notwendig, die stromführenden Stromsammelschienen an Stellen, an denen keine Schaltgeräte an die Stromsammelschienen montiert sind, mithilfe von Schutzabdeckungen für einen Nutzer berührungssicher zu machen. Bei den herkömmlichen Stromsammelschienensystemen besteht für einen Nutzer daher ein erheblicher Montageaufwand, da nicht nur die Schaltgeräte an die Stromsammelschienen montiert werden müssen, sondern auch zusätzlich elektrisch isolierende Abdeckelemente zur Sicherung des Nutzers an die Stromsammelschienen angebracht werden müssen.

Bei herkömmlichen Stromsammelschienensystemen können unterschiedliche Geräte an das Stromsammelschienensystem montiert werden. Diese Geräte umfassen beispielsweise Schutzschalteinrichtungen, Motorschutzschalter oder dergleichen. Diese werden üblicherweise mit Hilfe eines sogenannten Adapterteils montiert, welches als vollständig separates Element auf die Stromsammelschienen aufgesetzt wird. Das Adapterteil dient dabei zum einen zum Aufklemmen auf die Stromsammelschienen und zum anderen als Trägermodul für die unterschiedlichen Geräte. Die elektrische Verbindung zwischen den Stromsammelschienen einerseits und dem jeweiligen Gerät andererseits erfolgt dadurch, dass die Kontaktteile über Verbindungsleitungen mit dem betreffenden elektrischen Gerät verbunden werden. Nachteilig hierbei ist, dass der Adapter bzw. das Adapterteil als zusätzliche Komponente auf den Stromsammelschienen befestigt und mit Verbindungsleitungen oder Verbindungskontakten versehen werden muss. Ferner müssen die Geräte als separate Bauelemente auf den Adapter montiert und elektrisch mit Verbindungsleitungen oder Verbindungskontakten in Kontakt gebracht werden. Im Falle eines Austausches oder einer Demontage eines Gerätes ist es daher notwendig, die Abgangsleitungen von dem betreffenden Gerät zu entfernen und anschließend wieder zu verbinden. Zusätzlich ist das Gerät vor der Demontage gegenüber dem Adapterteil zu lösen und nach dem Austausch ist das neu ausgetauschte Gerät zu befestigen. Gegebenenfalls müssen zur Montage und/oder Demontage eines Gerätes sogar Stromsammelschienen des Stromsammelschienensystems stromlos geschaltet werden.

Aus der EP 2 461 440 A2 ist ein Stecksystem für eine Mehrzahl von Schutzgeräten mit elektrischen Kontakten bekannt. Das Stecksystem weist ein Unterteil auf einer Unterseite, auf dem Stromschienen anordenbar sind, und ein auf einer der Unterseite gegenüber angeordneten Oberseite zerstörungsfrei vom Unterteil lösbares Oberteil aus elektrisch isolierendem Material auf. Das Oberteil weist Öffnungen auf, durch welche die Stromschienen direkt von den elektrischen Kontakten der Schutzgeräte kontaktierbar sind. Des Weiteren ist aus der US 7,957,121 B1 ein Sicherungsschaltersystem bekannt, welches einen Sicherungsschaltkasten und elektrische Sicherungsschalter aufweist. Der Sicherungsschaltkasten besteht aus einem Gehäuse in dessen Inneren eine Sicherheitsabdeckung angeordnet ist, welche die elektrischen Komponenten, wie erste und zweite Kammschienen mit ihren Anschlussklemmen und einen Anschlusskontakt mit seinen Anschlussklemmen abdeckt.

Es ist daher eine Aufgabe der vorliegenden Erfindung, ein Gerät für ein Stromsammelschienensystem zu schaffen, das einerseits eine einfache Montage bzw. Demontage des Gerätes erlaubt und andererseits eine hohe Berührungssicherheit für den Nutzer bietet.

Diese Aufgabe wird erfindungsgemäß durch ein Gerät für ein Stromsammelschienensystem mit den in Patentanspruch 1 angegebenen Merkmalen gelöst.

Die Erfindung schafft demnach ein Gerät für ein Stromsammelschienensystem,
wobei ein Gehäuse des Gerätes an einer Gehäuseseite elektrische Anschlusskontakte aufweist, die derart ausgebildet sind, dass sie durch Durchführöffnungen eines berührungsgeschützten zweite Kammschienen mit ihren Anschlussklemmen und einen Anschlusskontakt mit seinen Anschlussklemmen abdeckt.

Es ist daher eine Aufgabe der vorliegenden Erfindung, ein Gerät für ein Stromsammelschienensystem zu schaffen, das einerseits eine einfache Montage bzw. Demontage des Gerätes erlaubt und andererseits eine hohe Berührungssicherheit für den Nutzer bietet.

Diese Aufgabe wird erfindungsgemäß durch ein Gerät für ein Stromsammelschienensystem mit den in Patentanspruch 1 angegebenen Merkmalen gelöst.

Die Erfindung schafft demnach ein Gerät für ein Stromsammelschienensystem,
wobei ein Gehäuse des Gerätes an einer Gehäuseseite elektrische Anschlusskontakte aufweist, die derart ausgebildet sind, dass sie durch Durchführöffnungen eines berührungsgeschützten Grundplattenmoduls des Stromsammelschienensystems hindurchführbar und in unterhalb der Durchführöffnungen liegende gleichmäßig beabstandete Kontaktöffnungen von innerhalb des berührungsgeschützten Grundplattenmoduls vorgesehenen Stromsammelschienenmodulen zur Herstellung einer direkten elektrischen und mechanischen Verbindung mit den Stromsammelschienenmodulen einsteckbar sind, wobei die Anschlusskontakte des Geräts V-förmig oder fingerförmig sowie selbstfedernd ausgebildet sind.

Bei einer möglichen Ausführungsform des erfindungsgemäßen Gerätes sind an dem Gehäuse des Gerätes zusätzlich Rastmittel angebracht, die auf einer Abdeckplatte des Grundplattenmoduls und/oder in parallel zu den Stromsammelschienenmodulen laufende Raststege des berührungsgeschützten Grundplattenmoduls aufrastbar sind.

Bei einer weiteren möglichen Ausführungsform des erfindungsgemäßen Gerätes ist das Gerät ein elektrisches, elektronisches oder elektromechanisches Gerät, das über die elektrisch verbundenen Stromsammelschienenmodule mit Strom versorgt wird und/oder über die elektrisch verbundenen Stromsammelschienenmodule mit anderen Geräten des Stromsammelschienensystems kommuniziert.

Bei einer weiteren möglichen Ausführungsform des erfindungsgemäßen Gerätes sind an dem Gehäuse des Gerätes für die elektrischen Anschlusskontakte jeweils zugehörige parallel dazu verlaufende Kontaktschutzrippen vorgesehen.

Bei einer weiteren möglichen Ausführungsform des erfindungsgemäßen Gerätes sind an dem Gehäuse des Gerätes Verpolschutzrippen zum korrekten Anschließen an das Stromsammelschienensystem vorgesehen.

Bei dem erfindungsgemäßen Gerät sind die Anschlusskontakte des Gerätes V-förmig oder fingerförmig ausgebildet und sind jeweils durch schlitzförmige Durchführöffnungen einer Abdeckplatte des Grundplattenmoduls hindurchführbar und in die darunterliegenden Kontaktöffnungen einsteckbar.

Bei einer weiteren möglichen Ausführungsform des erfindungsgemäßen Gerätes weist das Gehäuse des Gerätes einen angeformten Steg auf, an dem eine Trag- oder Hutschiene angebracht ist.

Bei einer weiteren möglichen Ausführungsform des erfindungsgemäßen Gerätes weist das Gerät erste elektrische Anschlusskontakte zur Stromversorgung des Gerätes und zweite elektrische Anschlusskontakte zur Kommunikation mit anderen Geräten des Stromsammelschienensystems auf.

Bei einer weiteren möglichen Ausführungsform des erfindungsgemäßen Gerätes besitzt das Gerät einen integrierten Transceiver, der dazu ausgelegt ist, Informationsdaten mit anderen Geräten des Stromsammelschienensystems mittels Powerline Communication, PLC, über die in die Stromsammelschienenmodule eingesteckten Anschlusskontakte des Gerätes oder über eine Funkschnittstelle auszutauschen.

Bei einer möglichen Ausführungsform des erfindungsgemäßen Gerätes ist das Gerät ein Motorsteuergerät.

Bei einer weiteren möglichen Ausführungsform des erfindungsgemäßen Gerätes ist das Gerät ein Messgerät.

Bei einer weiteren möglichen Ausführungsform des erfindungsgemäßen Gerätes ist das Gerät ein Anzeigegerät.

Bei einer weiteren möglichen Ausführungsform des erfindungsgemäßen Gerätes ist das Gerät ein Netzteil.

Bei einer weiteren möglichen Ausführungsform des erfindungsgemäßen Gerätes ist das Gerät ein Sicherungsgerät.

Bei einer weiteren möglichen Ausführungsform des erfindungsgemäßen Gerätes ist das Gerät ein Lasttrennschalter.

Bei einer weiteren möglichen Ausführungsform des erfindungsgemäßen Gerätes ist das Gerät ein Sicherungslasttrennschalter.

Bei einer weiteren möglichen Ausführungsform des erfindungsgemäßen Gerätes ist das Gerät ein Überspannungsschutzgerät.

Bei einer weiteren möglichen Ausführungsform des erfindungsgemäßen Gerätes ist das Gerät ein Blitzschutzgerät.

Bei einer weiteren möglichen Ausführungsform des erfindungsgemäßen Gerätes ist das Gerät ein Kommunikationsgerät.

Bei einer weiteren möglichen Ausführungsform des erfindungsgemäßen Gerätes ist das Gerät ein Fehlerstromschutzschalter. Bei einer weiteren möglichen Ausführungsform des erfindungsgemäßen Gerätes ist das Gerät ein Entstörgerät.

Im Weiteren werden mögliche Ausführungsformen des erfindungsgemäßen Gerätes für ein Stromsammelschienensystem unter Bezugnahme auf die beigefügten Figuren detailliert beschrieben.

Es zeigen:
- Fig. 1: eine Ansicht des exemplarischen Ausführungsbeispiels eines erfindungsgemäßen Gerätes für ein Stromsammelschienensystem;
- Fig. 2: eine weitere Ansicht des in Fig. 1 dargestellten Gerätes;
- Fig. 3: eine perspektivische Ansicht einer möglichen Ausführungsform eines in dem Stromsammelschienensystem verwendeten berührungsgeschützten Grundplattenmoduls mit verbautem Deckelmodul;
- Fig. 4: das in Fig. 3 dargestellte berührungsgeschützte Grundplattenmodul mit entferntem Deckelmodul;
- Figuren 5A, B, C, D: verschiedene Ausführungsbeispiele für mögliche Stromsammelschienenmodule, wie sie bei dem Stromsammelschienensystem verwendet werden können;
- Figuren 6A, B: verschiedene Ausführungsvarianten von elektrischen Anschlusskontakten, wie sie bei dem erfindungsgemäßen Gerät verwendet werden können;
- Fig. 7: zeigt schematisch ein in ein Grundplattenmodul eingestecktes erfindungsgemäßes Gerät in einer Schnittansicht.

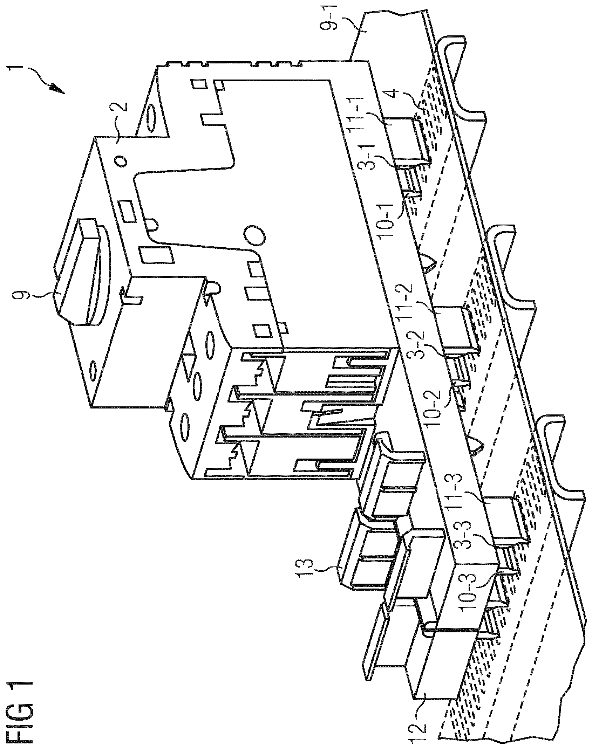

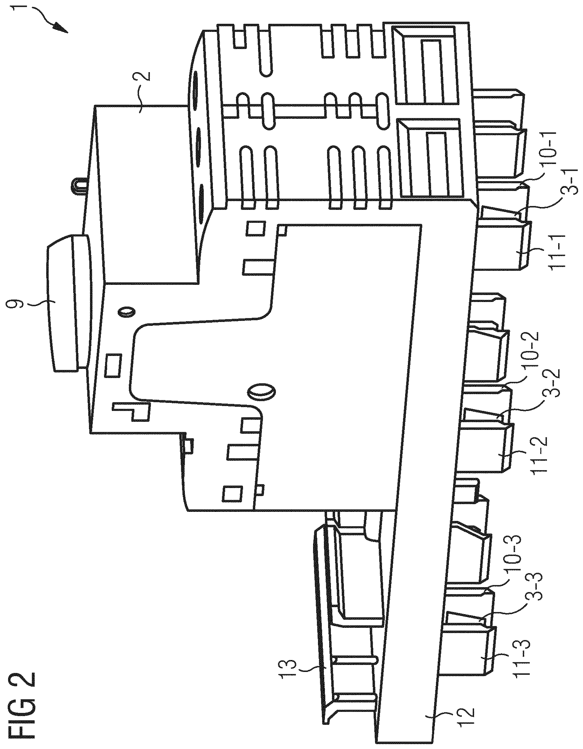

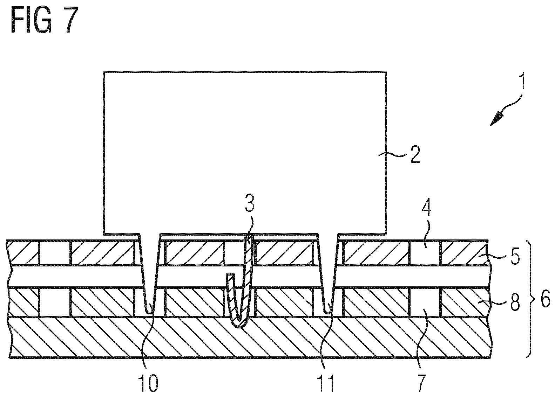

Fig. 1 und 2 zeigen perspektivische Ansichten eines exemplarischen Ausführungsbeispiels eines erfindungsgemäßen Gerätes 1 für ein Stromsammelschienensystem. Bei dem in Fig. 1, 2 dargestellten Ausführungsbeispiel handelt es sich um ein Motorsteuergerät, insbesondere einen Motorstarter. Das in den Fig. 1, 2 dargestellte Gerät 1 besitzt ein Gehäuse 2, in dem die elektrischen bzw. elektromechanischen Baukomponenten bzw. Bauelemente des Gerätes 1 integriert sind. Das Gehäuse 2 besitzt an seiner unteren Gehäuseseite elektrische Anschlusskontakte 3, die derart ausgebildet sind, dass sie durch Durchführöffnungen 4 einer Abdeckplatte 5 eines berührungsgeschützten Grundplattenmoduls 6 des Stromsammelschienensystems hindurchführbar sind und unterhalb der Durchführöffnungen 4 liegende gleichmäßig beabstandete Kontaktöffnungen 7 von innerhalb des Grundplattenmoduls 6 vorgesehenen Stromsammelschienenmodulen 8 zur Herstellung einer direkten elektrischen und mechanischen Verbindung mit den Stromsammelschienenmodulen 8 einsteckbar sind. Dies ist schematisch auch in Fig. 7 dargestellt.

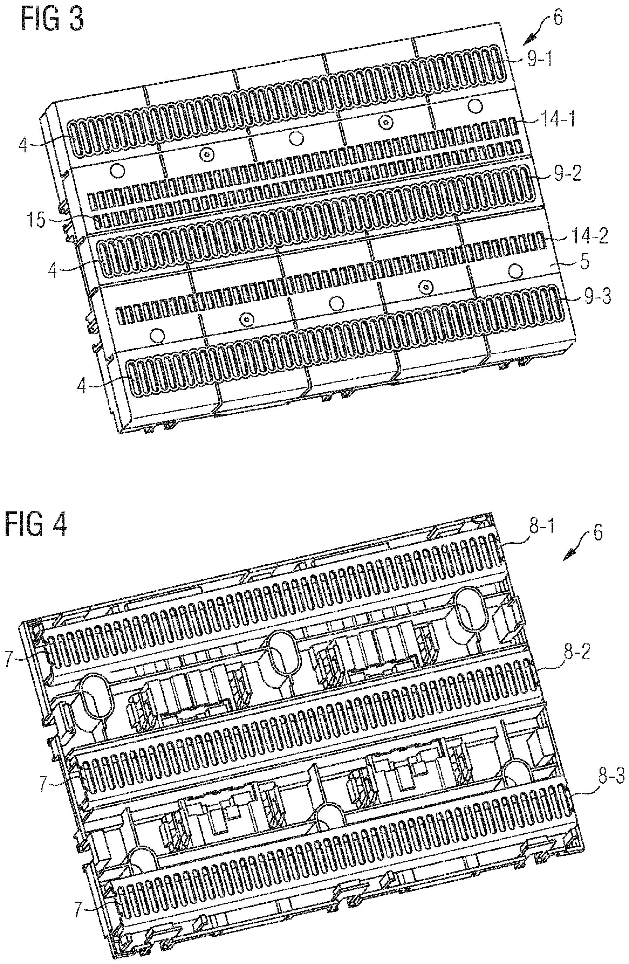

Figuren 3, 4 zeigen ein Ausführungsbeispiel des Grundplattenmoduls 6. In Fig. 3 ist das Grundplattenmodul 6 mit aufgesetzter Abdeckplatte 5 dargestellt, während in Fig. 4 das Grundplattenmodul 6 mit abgenommener Abdeckplatte 5 dargestellt ist. Wie man in Fig. 4 erkennen kann, befinden sich bei dem dargestellten Ausführungsbeispiel innerhalb des Grundplattenmoduls 6 drei parallel angeordnete Stromsammelschienen 8-1, 8-2, 8-3 für verschiedene Stromphasen L. Diese verschiedenen Stromsammelschienen 8-i besitzen jeweils gleichmäßig beabstandete Kontaktöffnungen 7. Bei dem dargestellten Ausführungsbeispiel gemäß Fig. 4 sind die Kontaktöffnungen 7 Kontaktschlitze, die in einem vorgegebenen Raster gleichmäßig zueinander beabstandet innerhalb der Stromsammelschienen 8 vorgesehen sind. Die Abdeckplatte 5 des Grundplattenmoduls 6 besitzt entsprechend den drei innerhalb des Grundplattenmoduls 6 vorgesehenen Stromsammelschienen 8-1, 8-2, 8-3 entsprechende Reihen 9-1, 9-1, 9-3 von Durchführöffnungen 4, die ebenfalls zueinander gleichmäßig beabstandet sind und über entsprechenden Kontaktöffnungen bzw. Kontaktschlitze 7 liegen, wie schematisch auch in Fig. 7 dargestellt.

Das in den Fig. 1, 2 dargestellte Gehäuse 2 des Gerätes 1 kann an seiner Oberseite ein oder mehrere Bedienelemente 9 aufweisen, beispielsweise einen Drehschalter oder dergleichen. Für jede Reihe 9-i von Durchführöffnungen 4 innerhalb der Abdeckplatte 5 bzw. für jede Reihe von Kontaktöffnungen 7 von Stromsammelschienen 8-i innerhalb des Grundplattenmoduls 6 besitzt das Gehäuse 2 an seiner Gehäuseunterseite mindestens einen entsprechenden elektrischen Anschlusskontakt 3-i, wie in den Fig. 1, 2 dargestellt. Für ein Grundplattenmodul 6, wie es in den Figuren 3, 4 mit und ohne Abdeckplatte 5 dargestellt ist, hat das Gerät 1 drei parallel zueinander angeordnete elektrische Anschlusskontakte 3-1, 3-2, 3-3, wie in den Fig. 1, 2 dargestellt. Der Abstand zwischen den elektrischen Anschlusskontakten 3-1, 3-2, 3-3 entspricht dabei dem Abstand zwischen den Durchführöffnungen 4 der Reihen 9-1, 9-2, 9-3 bzw. dem Abstand zwischen den darunterliegenden Kontaktöffnungen 7 der innerhalb des Grundplattenmoduls 6 vorgesehenen entsprechenden Stromsammelschienen 8-1, 8-2, 8-3. Das Gehäuse 2 des Gerätes 1 kann bei einer möglichen Ausführungsform auch mehrere Anschlusskontakte 3-i für jede Stromsammelschiene 8-i besitzen. Bei dem in den Fig. 1, 2 dargestellten exemplarischen Ausführungsbeispiel besitzt das Gehäuse 2 an der Gehäuseunterseite jeweils zwei elektrische Anschlusskontakte für jede der drei Stromsammelschienen 8-1, 8-2, 8-3. Die Anzahl der Anschlusskontakte 3-i des Gerätes 1 pro Sammelschiene 8-i kann abhängig vom Typ des Gerätes 1 variieren. Das Gerät 1, dessen elektrische, elektronische oder elektromechanische Baukomponenten in dem Gehäuse 2 integriert sind, kann über die elektrisch verbundenen Stromsammelschienenmodule 8-i des Grundplattenmoduls 6 elektrisch mit Strom versorgt werden. Beispielsweise sind drei Stromsammelschienen 8-1, 8-2, 8-3 für drei Stromphasen L1, L2, L3 innerhalb des Grundplattenmoduls 6 vorgesehen.

Bei einer möglichen Ausführungsform kommuniziert das Gerät 1 über die elektrisch verbundenen Stromsammelschienenmodule 8-1, 8-2, 8-3 mit anderen Geräten des Stromsammelschienensystems. Bei einer möglichen Ausführungsform besitzt das Gerät 1 erste elektrische Anschlusskontakte zur Stromversorgung des Gerätes 1 und zweite elektrische Anschlusskontakte zur Kommunikation mit anderen Geräten des Stromsammelschienensystems. Bei einer bevorzugten Ausführungsform weist das Gerät 1 einen in dem Gehäuse 2 integrierten Transceiver auf, der dazu ausgelegt ist, Informationsdaten mit anderen Geräten des Stromsammelschienensystems mittels Powerline-Kommunikation, PLC, über die in die Stromsammelschienenmodule 8-i eingesteckten Anschlusskontakte 3 des Gerätes 1 auszutauschen.

Bei einer möglichen Ausführungsform sind an dem Gehäuse 2 des Gerätes 1 für die elektrischen Anschlusskontakte 3-i jeweils zugehörige parallel dazu verlaufende Kontaktschutzrippen vorgesehen. In der schematischen Darstellung gemäß Fig. 7 sind parallel zu dem elektrischen Anschlusskontakt 3 des Gerätes 1 zwei parallel dazu verlaufende Kontaktschutzrippen 10, 11 dargestellt. Diese Kontaktschutzrippen 10, 11 sind auch in den Fig. 1, 2 erkennbar. Der für die erste Stromsammelschiene 8-1 vorgesehene elektrische Anschlusskontakt 3-1 besitzt zwei dazu parallel angeordnete Kontaktschutzrippen 10-1, 11-1. Weiterhin besitzt der für die zweite Stromsammelschiene 8-2 vorgesehene elektrische Anschlusskontakt 3-2 zwei parallel angeordnete Kontaktschutzrippen 10-2, 11-2. In gleicher Weise besitzt der dritte elektrische Anschlusskontakt 3-3 des Gerätes 1 für die dritte Stromsammelschiene 8-3 zwei dazu parallel angeordnete Kontaktschutzrippen 10-3, 11-3. Wie man in Fig. 7 erkennen kann, befindet sich eine Durchführöffnung 4 innerhalb der Abdeckplatte 5 des Grundplattenmoduls 6 direkt oberhalb einer entsprechenden Kontaktöffnung 7 einer Stromsammelschiene 8. Der Abstand zwischen den Durchführöffnungen 4 entspricht exakt dem Abstand zwischen den verschiedenen Kontaktöffnungen 7 innerhalb der Stromsammelschiene 8. Auch die Größe und Form der Durchführöffnungen 4 entspricht vorzugsweise exakt der Größe und Form der Kontaktöffnungen 7 innerhalb der Stromsammelschienenmodule 8. Vorzugsweise sind die Durchführöffnungen 4 und die darunterliegenden Kontaktöffnungen 7 schlitzartig ausgebildet, wie in den Figuren 3, 4 erkennbar.

Die Kontaktschutzrippen 10, 11 haben eine Führungsfunktion, um ein gezieltes Aufsetzen des Gehäuses 2 auf das Grundplattenmodul 6 zu gewährleisten. Die Kontaktschutzrippen 10, 11 bilden zugleich einen seitlichen mechanischen Schutz der Anschlusskontakte 3, insbesondere wenn das Gehäuse 2 des Gerätes 1 von dem Grundplattenmodul 6 entfernt worden ist. Der Abstand zwischen den seitlichen Kontaktschutzrippen 10, 11 zu dem dazwischenliegenden elektrischen Anschlusskontakt 3 entspricht vorzugsweise genau dem Abstand zwischen zwei Durchführöffnungen 4 innerhalb der Abdeckplatte 5 des Grundplattenmoduls 6 bzw. dem Abstand zwischen zwei Kontaktöffnungen 7 innerhalb eines Stromsammelschienenmoduls 8, wie in Fig. 7 dargestellt. Das Raster der elektrischen Anschlusskontakte 3 und der beiden seitlichen zugehörigen Kontaktschutzrippen 10, 11 entspricht somit dem Raster der Durchführöffnungen 4 innerhalb der Abdeckplatte 5 des Grundplattenmoduls 6 und dem Raster der Kontaktöffnungen 7 innerhalb der Stromsammelschienenmodule 8.

Bei dem in Fig. 7 und Fig. 1 dargestellten Ausführungsbeispiel besitzt der elektrische Anschlusskontakt 3 jeweils zwei dazu parallel angeordnete Kontaktschutzrippen 10, 11. Bei weiteren möglichen Ausführungsformen können weitere Kontaktschutzrippen 10, 11 parallel in dem entsprechenden Raster der Durchführöffnungen 4 bzw. Kontaktöffnungen 7 vorgesehen sein, um ein Einführen der Kontaktöffnungen 3 in das Grundplattenmodul 6 weiter zu erleichtern und die mechanische Stabilität im eingesetzten Zustand zu erhöhen. Bei dem in Fig. 7 dargestellten Ausführungsbeispiel sind die elektrischen Anschlusskontakte 3 V-förmig ausgebildet, sodass sie in einfacher Weise durch die Durchführöffnungen 4 hindurchgeführt werden können und anschließend eine elektrische und mechanische Verbindung mit den darunterliegenden Stromsammelschienenmodulen 8 herstellen, indem sie in deren Kontaktöffnungen 7 eingeführt werden.

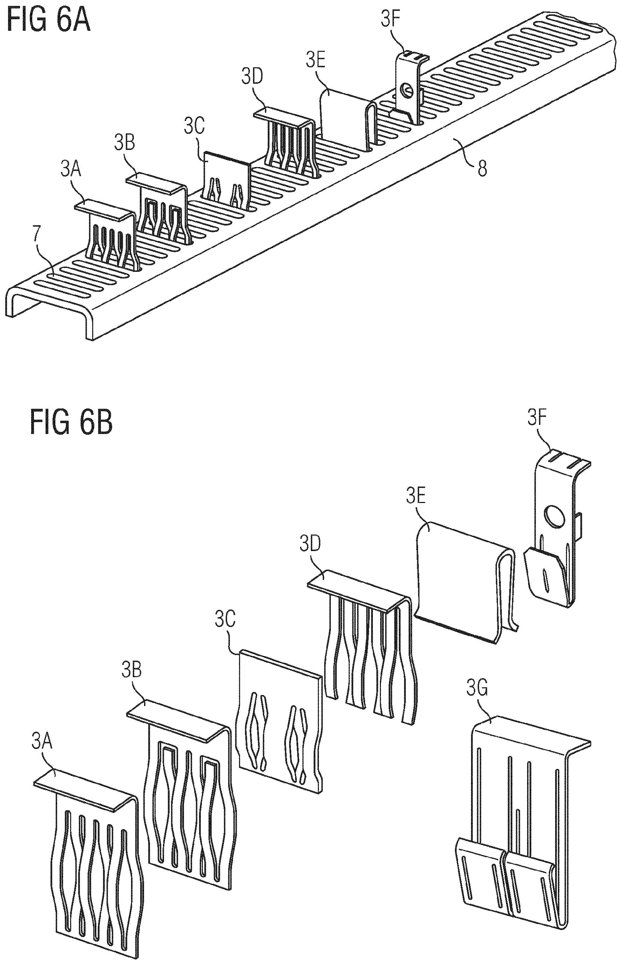

Die Figuren 6A, 6B zeigen verschiedene Ausführungsvarianten von elektrischen Anschlusskontakten 3 zum Anschließen des elektrischen Gerätes 1 in Kontaktöffnungen bzw. Kontaktschlitze 7 von Stromsammelschienenmodulen 8-i. Fig. 6A zeigt sechs verschiedene Ausführungsvarianten 3A bis 3F für mögliche elektrische Anschlusskontakte 3, welche durch Durchführöffnungen 4, insbesondere Durchführschlitze, hindurch in die Kontaktöffnungen bzw. Kontaktschlitze 7 eines Stromsammelschienenmoduls 8 einsteckbar sind. Fig. 6B zeigt die verschiedenen Ausführungsvarianten 3A bis 3F der elektrischen Anschlusskontakte 3-i gemäß Fig. 6A im uneingesteckten Zustand. Ferner zeigt Fig. 6B eine weitere Ausführungsvariante 3G eines Anschlusskontaktes 3. Die Anschlusskontakte 3 sind vorzugsweise derart ausgebildet, dass sie neben der elektrischen Kontaktierung auch eine mechanische Verbindung mit dem entsprechenden Stromsammelschienenmodul 8 herstellen, wie in Fig. 6A erkennbar.

Fig. 7 zeigt schematisch ein Gerät 1, bei dem V-förmige Anschlusskontakte entsprechend der Ausführungsvariante 3G gemäß Fig. 6B vorgesehen sind. Die verschiedenen Varianten der Anschlusskontakte 3 sind vorzugsweise derart ausgebildet, dass ein Gehäuse 2 eines Gerätes 1 in entsprechende Stromsammelschienenmodule 8 einsteckbar sind und anschließend bei Bedarf wieder herausgezogen werden können. Bei einer alternativen Ausführungsvariante können die elektrischen Anschlusskontakte 3 auch mechanisch derart ausgebildet sein, dass sie nach dem Einstecken in die Stromsammelschienenmodule 8 verrasten und das Gehäuse 2 nicht mehr einfach aus dem Stromsammelschienenmodul 8 herausziehbar ist.

Bei einer möglichen Ausführungsvariante sind an dem Gehäuse 2 des Gerätes 1 zusätzlich Rastmittel angebracht, die auf der Abdeckplatte 5 des Grundplattenmoduls 6 und/oder in parallel zu den Stromsammelschienenmodulen 8 verlaufende Raststege des berührungsgeschützten Grundplattenmoduls 6 aufrastbar sind. Die in den Figuren 6A, 6B dargestellten Anschlusskontakte 3 sind V-förmig, wie in den Varianten 3F, 3G dargestellt, ausgebildet oder fingerförmig ausgebildet, wie beispielsweise in Fig. 3D gezeigt. Die Anschlusskontakte 3 sind durch schlitzförmige Durchführöffnungen 4 der Abdeckplatte 5 des Grundplattenmoduls 6 hindurchführbar und in die unmittelbar darunterliegenden Kontaktöffnungen 7 einsteckbar.

Wie man in Fig. 1 erkennen kann, besitzt das Gehäuse 2 des Gerätes 1 bei einer möglichen Ausführungsform einen angeformten Steg 12, an dem eine Trag- oder Hutschiene 13 angebracht sein kann. Bei dem in Fig. 1 dargestellten Ausführungsbeispiel ist an dem Steg 12 des Gehäuses 2 eine Hutschiene 13 vorgesehen, die es erlaubt, weitere Geräte, beispielsweise einen Schütz oder dergleichen, zu montieren.

Bei dem in Fig. 1 dargestellten Ausführungsbeispiel ist für jede Stromsammelschiene 8-i des Stromsammelschienensystems ein Paar von Anschlusskontakten 3-i vorgesehen. Insgesamt besitzt das Gerät 1 bei dem in Fig. 1 dargestellten Ausführungsbeispiel demnach sechs elektrische Anschlusskontakte 3, wobei jeweils zwei elektrische Anschlusskontakte für eine der drei Stromsammelschienenmodule 8-i des Stromsammelschienensystems vorgesehen sind. Bei einer möglichen Ausführungsform wird dabei jeweils ein elektrischer Anschlusskontakt 3 des Anschlusskontaktpaares zur Stromversorgung des Gerätes 1 verwendet und der danebenliegende zweite elektrische Anschlusskontakt 3 zur Kommunikation mit weiteren Geräten des Stromsammelschienensystems. Der in Fig. 1 dargestellte Motorstarter 1 kann auf diese Weise mit weiteren unterschiedlichen Geräten des Stromsammelschienensystems kommunizieren bzw. über dafür vorgesehene Anschlusskontakte 3 Informationsdaten austauschen. Diese unterschiedlichen Geräte des Stromsammelschienensystems weisen beispielsweise ein Motorsteuergerät, ein Messgerät, ein Anzeigegerät, ein Netzteil, ein Sicherungsgerät, einen Lasttrennschalter, einen Sicherungslasttrennschalter, ein Überspannungsschutzgerät, ein Blitzschutzgerät, ein Kommunikationsgerät, einen Fehlerstromschutzschalter oder ein Entstörgerät auf.

Das in Fig. 3 dargestellte berührungsgeschützte Grundplattenmodul 6 besteht bei einer möglichen Ausführungsform aus der Abdeckplatte 5 und einem Unterteil, die beide miteinander fest verbunden sind. Bei einer möglichen Ausführungsform ist das Oberteil bzw. die Abdeckplatte 5 auf das Unterteil mittels Clipverbindungen aufgeclippt. Bei einer alternativen Ausführungsform ist das Oberteil bzw. die Abdeckplatte 5 mit dem Unterteil fest verschraubt. Weiterhin kann die Abdeckplatte 5 mit dem Unterteil fest verschweißt sein. Bei einer weiteren möglichen Ausführungsform ist die Abdeckplatte 5 mit dem Unterteil des berührungsgeschützten Grundplattenmoduls 6 vernietet oder verklebt. Sowohl das Oberteil bzw. die Abdeckplatte 5 als auch das Unterteil bestehen aus einem elektrisch isolierenden Material. Bei einer bevorzugten Ausführungsform besteht die Abdeckplatte 5 und das Unterteil aus einem flammgeschützten Kunststoff. Bei einer bevorzugten Ausführungsform weist der elektrisch isolierende flammgeschützte Kunststoff des Oberteils 5 und des Unterteils des berührungsgeschützten Grundplattenmoduls 6 eine relativ hohe Wärmeleitfähigkeit zum Ableiten von Wärme auf. Das Gehäuse 2 des Gerätes 1 besteht vorzugsweise aus einem elektrisch isolierenden flammgeschützten Kunststoff.

Die elektrischen Geräte 1 können direkt auf das Grundplattenmodul 6 aufgesetzt werden, ohne dass man hierfür Adaptereinrichtungen oder dergleichen benötigt. Die Geräte bzw. Schaltgeräte 1 besitzen jeweils ein Gehäuse 2, an dessen Unterseite V-förmige oder fingerförmige Anschlusskontakte 3 angebracht sind. Diese Anschlusskontakte 3 dienen zur Herstellung einer elektrischen Verbindung mit den innerhalb des berührungsgeschützten Grundplattenmoduls 6 vorhandenen elektrisch leitfähigen Stromsammelschienenmodulen 8. Die Anschlusskontakte 3 der Geräte 1 sind bei einer möglichen Ausführungsform selbstfedernd ausgebildet. Bei einer weiteren möglichen Ausführungsform sind die Anschlusskontakte 3 des Gerätes 1 fremdgefedert.

Bei der in Fig. 1 dargestellten Ausführungsform weist die Vorderseite bzw. die Abdeckplatte 5 des Grundplattenmoduls 6 drei Reihen 9-i von Durchführöffnungen 4 auf. Die Anschlusskontakte 3 des Gerätes 1 sind derart ausgebildet, dass sie durch die Durchführöffnungen 4 der Abdeckplatte 5 hindurchführbar sind und nach dem Hindurchführen in direkt darunterliegende, entsprechend angeordnete Kontaktöffnungen 7 eines vorgegebenen Kontaktöffnungsrasters der von dem isolierenden berührungsgeschützten Grundplattenmodul 6 umschlossenen elektrisch leitfähigen Stromsammelschienenmodule 8 einsteckbar sind. Bei den elektrisch leitfähigen Stromsammelschienenmodulen 8 handelt es sich um spezielle Stromsammelschienenmodule 8 mit Kontaktöffnungen 7, die ebenfalls das vorgegebene Kontaktöffnungsraster aufweisen. Bei der in den Figuren 3, 4 dargestellten Ausführungsform sind die Durchführöffnungen 4 und die Kontaktöffnungen 7 schlitzförmig ausgebildet. Alternativ können die Durchführöffnungen 4 und die Kontaktöffnungen 7 auch kreisförmig, elliptisch, quadratisch oder dreieckförmig ausgebildet sein.

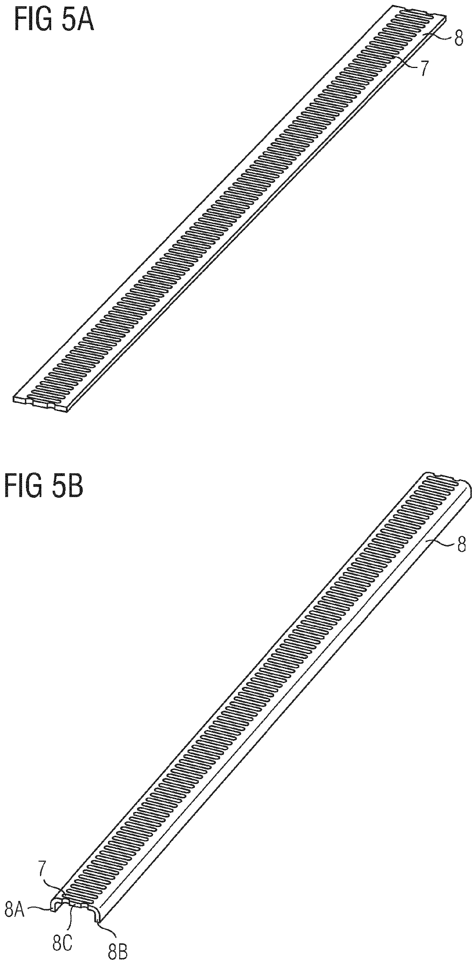

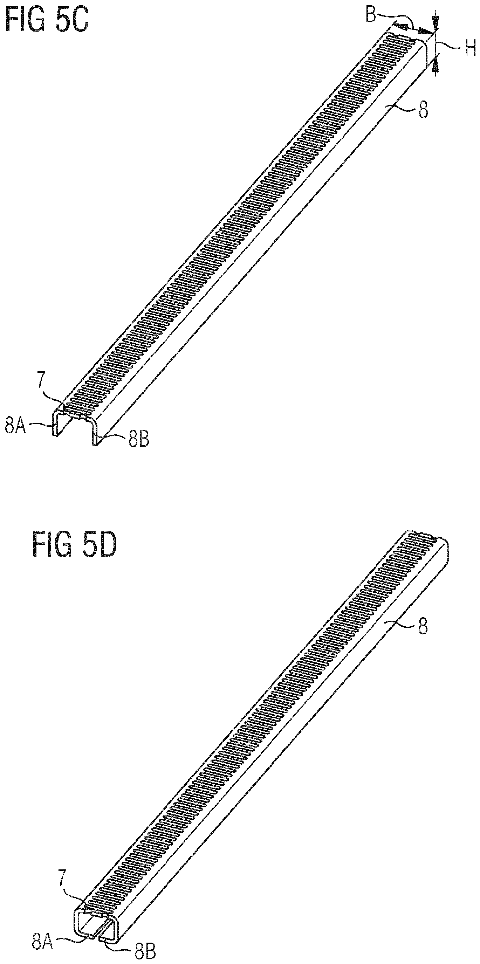

Die Figuren 5A, 5B, 5C, 5D zeigen verschiedene Ausführungsvarianten von elektrisch leitfähigen Stromsammelschienenmodulen 8. In den Ausführungsvarianten gemäß Figuren 5A bis 5D sind die Kontaktöffnungen 7 schlitzförmig geformt und bilden Kontaktschlitze. In diese werden entsprechende Anschlusskontakte 3 des erfindungsgemäßen Gerätes 1 eingeführt, um eine elektrische und mechanische Verbindung herzustellen. Die Durchführöffnungen 4 und die Kontaktöffnungen 7 weisen bei einer möglichen Ausführungsvariante einen vorgegebenen Abstand von 4,5 mm auf und können vorzugsweise 2,2 mm breit sein. Die Durchführöffnungen 4 und Kontaktöffnungen 7 sind bei einer möglichen Ausführungsform Kontaktschlitze und besitzen bei einer möglichen Ausführungsvariante eine Schlitzlänge von etwa 15 mm. Bei einer alternativen Ausführungsform sind auch andere Abmessungen und Teilungen der Durchführöffnungen 4 und der Kontaktöffnungen 7 möglich. In entsprechender Weise können auch die Abmessungen und Abstände der Anschlusskontakte 3 des Gerätes 1 variieren.

Bei der in Fig. 5A dargestellten Ausführungsvariante ist das elektrische leitfähige Stromsammelschienenmodul 8 flach ausgebildet. Bei den in den Figuren 5B, 5C und 5D dargestellten Ausführungsformen weisen die Stromsammelschienenmodule 8 ein U-förmiges bzw. O-förmiges Querprofil auf.

Bei der in den Figuren 3, 4 dargestellten Ausführungsvariante verfügt das berührungsgeschützte Grundplattenmodul 6 über zwei Reihen 14-1, 14-2 mit Konturen bzw. Schlitzen, die für die Aufnahme von Verriegelungen der installierten Geräte 1 vorgesehen sind. Diese Verriegelungen können die Geräte 1 gegen Abziehen nach vorne sichern. Die Kontaktschutzrippen 10, 11 sichern das Gerät 1 in Schwerkraftrichtung. Darüber hinaus ist bei der in Fig. 3 dargestellten Ausführungsvariante eine weitere Reihe 15 von Konturen bzw. Schlitzen vorgesehen, in die Verpolschutzrippen der angeschlossenen Geräte 1 eintauchen können. Die Verpolschutzrippen befinden sich an der Unterseite des in den Fig. 1, 2 dargestellten Gehäuses 2 des Gerätes 1. Die Konturen bzw. Schlitze der Reihe 15 innerhalb des Oberteiles 5 des berührungsgeschützten Grundplattenmoduls 6 verhindern, dass elektrische Geräte 1 falsch bzw. falsch gepolt in das berührungsgeschützte Grundplattenmodul 6 aufgesteckt werden können. Durch die spezielle Anordnung der verschiedenen Durchführschlitze 4 der Verriegelungskonturen sowie der Verpolschutzkonturen für die Verpolschutzrippen der Geräte 1 kann das gesamte berührungsgeschützte Grundplattenmodul 6 mit elektrischen Geräten 1 bestückt werden, ohne dass links oder rechts Montageplatz verloren geht. Die Geräte 1 können vorzugsweise ohne Abstand zueinander auf dem berührungsgeschützten Grundplattenmodul 6 lückenlos aneinandergereiht werden, sodass an der Front- bzw. Stirnseite des berührungsgeschützten Grundplattenmoduls 6 kein Freiraum bleibt bzw. kein Platz verloren geht. Bei einer möglichen Ausführungsform bietet das berührungsgeschützte Grundplattenmodul 6 einen IP20-Berührungsschutz. Durch die Reihe von Kodierungs- und Verpolschutzrippen kann zudem ein irrtümliches Verdrehen von anzuschließenden Geräten 1 sicher verhindert werden. Die Geräte 1 können mit dem Stromsammelschienensystem ohne Nutzung von Werkzeugen verbunden und wieder davon entfernt werden. Lediglich für das Betätigen eines Rastelementes des Gerätes 1 kann ggf. ein Schlitzschraubendreher verwendet werden.

Bei einer möglichen Ausführungsvariante kommunizieren die Geräte 1 des Stromsammelschienensystems miteinander mittels Powerline-Kommunikation, PLC, über die in dem berührungsgeschützten Grundplattenmodul 6 enthaltenen Stromsammelschienen 8. Dabei besitzen die Geräte 1 jeweils einen Transceiver zum Austausch von Informationsdaten über zugehörige Anschlusskontakte 3. Vorzugsweise wird zur Datenübertragung ein Frequenzbereich von 50 bis 500 kHz und/oder von 16 MHz bis 30 MHz genutzt. Im unteren Frequenzbereich können Datenraten von bis zu 2,5 Mbit/sec erreicht werden, während im oberen Frequenzbereich bis zu 14 Mbit/sec erreicht werden können. Bei einer weiteren möglichen Ausführungsform des Stromsammelschienensystems kommunizieren die an das Stromsammelschienensystem angeschlossenen Geräte 1 miteinander über eine separate drahtlose Funkschnittstelle.

Bei einer weiteren möglichen Ausführungsvariante des erfindungsgemäßen Gerätes 1 erfolgt die Kommunikation zwischen dem Gerät 1 und weiteren Geräten 1 über verschiedene Kommunikationskanäle, insbesondere mittels elektrischer Datenleitungen, mittels Powerline-Kommunikation und/oder mittels drahtloser Kommunikation über Funkschnittstellen. Diese Funkschnittstellen umfassen bei einer möglichen Ausführungsvariante eine WLAN-, eine Bluetooth-, eine ZigBee- oder eine RFID-Schnittstelle. Insbesondere mithilfe einer Funkschnittstelle kann zusätzlich eine Kommunikation des Gerätes 1 über einen externen Sender und Empfänger erfolgen, beispielsweise einem Smartphone, um Daten und Parameter austauschen und einstellen zu können. Bei einer weiteren möglichen Ausführungsform besitzt das berührungsgeschützte Grundplattenmodul 6 Zusatzmodule für Neutralleiter N oder PE-Leiter oder ist für Datenleitungen erweiterbar. Bei dieser Ausführungsvariante besitzt das Gerät 1 entsprechende Anschlusskontakte zur Verbindung mit dem Neutralleiter N und/oder mit dem PE-Leiter des Zusatzmoduls.

Das erfindungsgemäße Gerät 1 kann schnell und mit relativ geringem Kraftaufwand an das Stromsammelschienensystem angebracht werden. Die Montage erfolgt dabei ohne Einsatz eines Werkzeuges. Das berührungsgeschützte Grundplattenmodul 6 bietet einen nahezu vollkommenen Berührungsschutz für den Nutzer. Weiterhin kann das in Fig. 1 dargestellte Gerät 1 schnell und sicher bei Bedarf von der Montageplatte bzw. dem berührungsgeschützten Grundplattenmodul 6 abgezogen werden, ohne dass die Stromsammelschienenmodule 8-i strom- bzw. spannungsfrei geschaltet werden müssen. Der Übergangswiderstand zwischen dem elektrischen Gerät 1 und den Stromsammelschienen 8-i ist sehr gering, sodass die hierdurch erzeugte Verlustleistung ebenfalls minimal ist. Die Stromsammelschienen 8-i werden bei einer möglichen Ausführungsform nicht nur zur Stromversorgung bzw. Spannungsversorgung der angeschlossenen Geräte 1 verwendet, sondern dienen gleichzeitig zur Kommunikation der verschiedenen Geräte 1 untereinander. Das berührungsgeschützte Grundplattenmodul 6 ist bei einer bevorzugten Ausführungsform in einem Schaltschrank vorgesehen, wobei die Reihen von Durchführöffnungen 4 und die entsprechenden Reihen von Kontaktöffnungen 7 horizontal innerhalb des Schaltschrankes verlaufen. Im nicht eingebauten Zustand des Gerätes 1 dienen die Kontaktschutzrippen 10, 11 zum Schutz der dazwischenliegenden Anschlusskontakte 3, beispielsweise vor Verbiegen oder anderen mechanischen Beschädigungen. Im eingebauten Zustand des Gerätes 1, d.h. nach Einsetzen in das Grundplattenmodul 6, bieten die Kontaktschutzrippen 10, 11 eine mechanische Haltekraft gegen die Schwerkraft. Zusätzlich stellen die elektrischen Anschlusskontakte 3 auch eine mechanische Verbindung mit den Stromsammelschienenmodulen 8 her.

## Patentansprüche

1. Gerät (1) für ein Stromsammelschienensystem,
wobei ein Gehäuse (2) des Gerätes (1) an einer Gehäuseseite elektrische Anschlusskontakte (3) aufweist, die derart ausgebildet sind, dass sie durch Durchführöffnungen (4) eines berührungsgeschützten Grundplattenmoduls (6) des Stromsammelschienensystems hindurchführbar und in unterhalb der Durchführöffnungen (4) liegende gleichmäßig beabstandete Kontaktöffnungen (7) von innerhalb des Grundplattenmoduls (6) vorgesehenen Stromsammelschienenmodulen (8) zur Herstellung einer direkten elektrischen und mechanischen Verbindung mit den Stromsammelschienenmodulen einsteckbar sind, **dadurch gekennzeichnet, dass** die Anschlusskontakte (3) des Gerätes (1) V-förmig oder fingerförmig sowie selbstfedernd ausgebildet sind.

2. Gerät nach Anspruch 1,
wobei an dem Gehäuse (2) des Gerätes (1) zusätzlich Rastmittel angebracht sind, die auf einer Abdeckplatte (5) des Grundplattenmoduls (6) und/oder in parallel zu den Stromsammelschienenmodulen (8) laufende Raststege des berührungsgeschützten Grundplattenmoduls (6) aufrastbar sind.

3. Gerät nach Anspruch 1 oder 2,
wobei das Gerät (1) ein elektrisches, elektronisches oder elektromechanisches Gerät ist, das über die elektrisch verbundenen Stromsammelschienenmodule (8) mit Strom versorgt wird und/oder über die elektrisch verbundenen Stromsammelschienenmodule (8) mit anderen Geräten (1) des Stromsammelschienensystems kommuniziert.

4. Gerät nach einem der vorangehenden Ansprüche 1 bis 3,
wobei an dem Gehäuse (2) des Gerätes (1) für die elektrischen Anschlusskontakte (3) jeweils zugehörige parallel dazu verlaufende Kontaktschutzrippen (10, 11) vorgesehen sind.

5. Gerät nach einem der vorangehenden Ansprüche 1 bis 4, wobei an dem Gehäuse (2) des Gerätes (1) Verpolschutzrippen zum korrekten Anschließen an das Stromsammelschienensystem vorgesehen sind.

6. Gerät nach einem der vorangehenden Ansprüche 1 bis 5, wobei die Anschlusskontakte (3) des Gerätes (1) jeweils durch schlitzförmige Durchführöffnungen (4) einer Abdeckplatte (5) des Grundplattenmoduls (6) hindurchführbar und in die darunterliegenden Kontaktöffnungen (7) einsteckbar sind.

7. Gerät nach einem der vorangehenden Ansprüche 1 bis 6, wobei das Gehäuse (2) des Gerätes (1) einen angeformten Steg (12) aufweist, an dem eine Trag- oder Hutschiene (13) angebracht ist.

8. Gerät nach einem der vorangehenden Ansprüche 1 bis 7, wobei das Gerät (1) erste elektrische Anschlusskontakte (3) zur Stromversorgung des Gerätes (1) und zweite elektrische Anschlusskontakte (3) zur Kommunikation mit anderen Geräten (1) des Stromsammelschienensystems aufweist.

9. Gerät nach einem der vorangehenden Ansprüche 1 bis 8, wobei das Gerät (1) einen integrierten Transceiver aufweist, der dazu ausgelegt ist, Informationsdaten mit anderen Geräten (1) des Stromsammelschienensystems mittels Powerline Communication, PLC, über die in die Stromsammelschienenmodule (8) eingesteckten Anschlusskontakte (3) des Gerätes (1) oder über eine Funkschnittstelle auszutauschen.

10. Gerät nach einem der vorangehenden Ansprüche 1 bis 9, wobei das Gerät (1) aufweist:
ein Motorsteuergerät,
ein Messgerät,
ein Anzeigegerät,
ein Netzteil,
ein Sicherungsgerät,
einen Lasttrennschalter,
einen Sicherungslasttrennschalter,
ein Überspannungsschutzgerät,
ein Blitzschutzgerät,
ein Kommunikationsgerät,
einen Fehlerstromschutzschalter und
ein Entstörgerät.

11. Gerät nach einem der vorangehenden Ansprüche 4 bis 10, wobei der Abstand zwischen zwei seitlichen Kontaktschutzrippen (10, 11) zu dem dazwischenliegenden zugeordneten elektrischen Anschlusskontakt (3) dem Abstand zwischen zwei Durchführöffnungen (4) innerhalb der Abdeckplatte (5) des Grundplattenmoduls (6) bzw. dem Abstand zwischen zwei Kontaktöffnungen (7) innerhalb eines Stromsammelschienenmoduls (8) entspricht, so dass ein Raster der elektrischen Anschlusskontakte (3) und der beiden seitlichen zugehörigen Kontaktschutzrippen (10, 11) dem Raster der Durchführöffnungen (4) innerhalb der Abdeckplatte (5) des Grundplattenmoduls (6) und dem Raster der Kontaktöffnungen (7) innerhalb der Stromsammelschienenmodule (8) entspricht.

12. Gerät nach Anspruch 11,
wobei weitere Kontaktschutzrippen (10, 11) parallel in dem entsprechenden Raster der Durchführöffnungen (4) bzw. Kontaktöffnungen (7) vorgesehen sind.

## Claims

1. Device (1) for a busbar system,
wherein a housing (2) of the device (1) comprises electrical connector contacts (3) on a housing side, which are embodied in such a manner that they can be guided through feedthrough openings (4) of a contact-protected base plate module (6) of the busbar system and can be plugged into contact openings (7), which lie uniformly spaced below the feedthrough openings (4), of busbar modules (8) which are provided within the base plate module (6), so as to produce a direct electrical and mechanical connection to the busbar modules, **characterised in that** the connector contacts (3) of the device (1) are V-shaped or finger-shaped and also self-resilient.

2. Device according to claim 1,
wherein latching means are additionally attached to the housing (2) of the device (1) and the latching means can be latched on a cover plate (5) of the base plate module (6) and/or latching bars of the contact-protected base plate module (6), which run in parallel to the busbar modules (8).

3. Device according to claim 1 or 2,
wherein the device (1) is an electrical, electronic or electromechanical device which is supplied with power via the electrically connected busbar modules (8) and/or communicates with other devices (1) of the busbar system via the electrically connected busbar modules (8).

4. Device according to one of the preceding claims 1 to 3, wherein in each case associated contact protection ribs (10, 11), which extend parallel to the electrical connector contacts, are provided on the housing (2) of the device (1) for the electrical connector contacts (3).

5. Device according to one of the preceding claims 1 to 4, wherein ribs that protect against polarity reversal are provided on the housing (2) of the device (1) for the correct connection to the busbar system.

6. Device according to one of the preceding claims 1 to 5, wherein the connector contacts (3) of the device (1) can be guided in each case through slot-shaped feedthrough openings (4) of a cover plate (5) of the base plate module (6) and can be plugged into the contact openings (7) that lie below.

7. Device according to one of the preceding claims 1 to 6, wherein the housing (2) of the device (1) comprises an integrally formed bar (12) and a mounting rail or top hat rail (13) is attached to the integrally formed bar.

8. Device according to one of the preceding claims 1 to 7, wherein the device (1) comprises first electrical connector contacts (3) for the power supply of the device (1) and second electrical connector contacts (3) for communication with other devices (1) of the busbar system.

9. Device according to one of the preceding claims 1 to 8, wherein the device (1) comprises an integrated transceiver that is designed so as to exchange information data with other devices (1) of the busbar system by means of powerline communication, PLC, via the connection contacts (3) of the device (1), which are plugged into the busbar modules (8), or via a radio interface.

10. Device according to one of the preceding claims 1 to 9, wherein the device (1) comprises:
a motor control device,
a measuring device,
a display device,
a power supply unit,
a backup device,
a load-break switch,
a backup load-break switch,
an overvoltage protection device,
a lightning protection device,
a communication device,
a fault-current circuit breaker and
a suppressor.

11. Device according to one of the preceding claims 4 to 10, wherein the spacing between two side contact protection ribs (10, 11) to the allocated electrical connector contact (3) that lies therebetween corresponds to the spacing between two feedthrough openings (4) within the cover plate (5) of the base plate module (6) or to the spacing between two contact openings (7) within a busbar module (8) with the result that a pattern of the electrical connector contacts (3) and the two side associated contact protection ribs (10, 11) corresponds to the pattern of the feedthrough openings (4) within the cover plate (5) of the base plate module (6) and the pattern of the contact openings (7) within the busbar modules (8).

12. Device according to claim 11,
wherein further contact protection ribs (10, 11) are provided in parallel with the corresponding pattern of the feedthrough openings (4) or contact openings (7).

## Revendications

1. Appareil (1) pour un système de barre omnibus,
dans lequel un boîtier (2) de l'appareil (1) présente, sur un côté du boîtier, des contacts de raccordement électrique (3) qui sont conçus de manière à pouvoir être passés à travers des ouvertures de passage (4) d'un module de plaque de base (6) protégé contre les contacts accidentels du système de barres omnibus et être enfichés dans des ouvertures de contact (7) régulièrement espacées, situées en dessous des ouvertures de passage (4), de modules de barre omnibus (8) prévus à l'intérieur du module de plaque de base (6) pour établir une liaison électrique et mécanique directe avec les modules de barre omnibus,
**caractérisé en ce que**
les contacts de raccordement (3) de l'appareil (1) sont réalisés en forme de V ou de doigt ainsi qu'à élasticité propre.

2. Appareil selon la revendication 1,
dans lequel des moyens d'encliquetage supplémentaires sont montés sur le boîtier (2) de l'appareil (1), lesquels peuvent être encliquetés sur une plaque de recouvrement (5) du module de plaque de base (6) et/ou dans des barrettes d'encliquetage du module de plaque de base (6) protégé contre les contacts accidentels s'étendant parallèlement aux modules de barre omnibus (8).

3. Appareil selon la revendication 1 ou 2,
dans lequel l'appareil (1) est un appareil électrique, électronique ou électromécanique qui est alimenté en courant par les modules de barre omnibus (8) reliés électriquement et/ou qui communique avec d'autres appareils (1) du système de barre omnibus par les modules de barre omnibus (8) reliés électriquement.

4. Appareil selon l'une des revendications précédentes 1 à 3, dans lequel il est prévu sur le boîtier (2) de l'appareil (1), pour les contacts de raccordement électrique (3), des nervures de protection contre le contact (10, 11) respectivement associées et s'étendant parallèlement à ceux-ci.

5. Appareil selon l'une des revendications précédentes 1 à 4, dans lequel des nervures de protection contre l'inversion de polarité sont prévues sur le boîtier (2) de l'appareil (1) pour le raccordement correct au système de barre omnibus.

6. Appareil selon l'une des revendications précédentes 1 à 5, dans lequel les contacts de raccordement (3) de l'appareil (1) peuvent être passés respectivement à travers des ouvertures de passage (4) en forme de fentes d'une plaque de recouvrement (5) du module de plaque de base (6) et être enfichés dans les ouvertures de contact (7) situées en dessous.

7. Appareil selon l'une des revendications précédentes 1 à 6, dans lequel le boîtier (2) de l'appareil (1) présente une entretoise (12) formée sur lui, sur laquelle est monté un rail porteur ou un rail DIN (13).

8. Appareil selon l'une des revendications précédentes 1 à 7, dans lequel l'appareil (1) présente des premiers contacts de raccordement électrique (3) pour l'alimentation en courant de l'appareil (1) et des deuxièmes contacts de raccordement électrique (3) pour la communication avec d'autres appareils (1) du système de barre omnibus.

9. Appareil selon l'une des revendications précédentes 1 à 8, dans lequel l'appareil (1) présente un émetteur-récepteur intégré conçu pour échanger des données d'information avec d'autres appareils (1) du système de barre omnibus par communication par courant porteur en ligne, CPL, via les contacts de raccordement (3) de l'appareil (1) enfichés dans les modules de barre omnibus (8) ou via une interface radio.

10. Appareil selon l'une des revendications précédentes 1 à 9, dans lequel l'appareil (1) présente :
un appareil de commande de moteur,
un appareil de mesure,
un appareil d'affichage,
un bloc d'alimentation,
un dispositif de sécurité,
un interrupteur-sectionneur,
un interrupteur-sectionneur à fusibles,
un appareil de protection contre les surtensions,
un appareil de protection contre la foudre,
un appareil de communication,
un disjoncteur différentiel et
un dispositif d'antiparasitage.

11. Appareil selon l'une des revendications précédentes 4 à 10, dans lequel la distance entre deux nervures de protection latérales contre le contact (10, 11) et le contact de raccordement électrique (3) associé situé entre elles correspond à la distance entre deux ouvertures de passage (4) à l'intérieur de la plaque de recouvrement (5) du module de plaque de base (6) ou à la distance entre deux ouvertures de passage (5) à l'intérieur d'un module de barre omnibus (8), de sorte qu'une trame des contacts de raccordement électrique (3) et des deux nervures de protection latérales contre le contact (10, 11) associées correspond à la trame des ouvertures de passage (4) à l'intérieur de la plaque de recouvrement (5) du module de plaque de base (6) et à la trame des ouvertures de contact (7) à l'intérieur des modules de barre omnibus (8).

12. Appareil selon la revendication 11,
dans lequel d'autres nervures de protection contre le contact (10, 11) sont prévues en parallèle dans la trame correspondante des ouvertures de passage (4) ou des ouvertures de contact (7).
